# FASCICULE DE BREVET EUROPEEN

(11) **EP 2 823 875 B1**
(45) Date de publication et mention de la délivrance du brevet: **23.12.2015**
(21) Numéro de dépôt: 14176701.2
(22) Date de dépôt: 11.07.2014
(51) Int. Cl.: B01D 53/56, B01D 53/75, B01D 53/79, B01D 53/83, B01D 53/86, B01D 53/96

(54) **Procédé d'épuration de fumées de combustion**
Verfahren zur Rauchgasreinigung
Method for purifying combustion fumes

(30) Priorité: 12.07.2013 FR 1356898
(43) Date de publication de la demande: 14.01.2015
(73) Titulaire: LAB SA, 69007 Lyon (FR)
(72) Inventeur: Siret, Bernard, 69200 VENISSIEUX (FR); Tabaries, Franck, 83430 Saint Mandrier sur Mer (FR)
(74) Mandataire: Grand, Guillaume

(56) Documents cités:
- EP-A1- 0 803 278
- EP-A1- 1 064 981
- EP-A1- 2 397 214
- EP-A2- 0 136 966
- DE-A1- 19 612 240
- DE-A1-102005 005 818
- FR-A1- 2 934 790

## Description

La présente invention concerne un procédé d'épuration de fumées de combustion.

Lors de la combustion de matières comme le charbon ou le fioul, par exemple en vue de produire de l'énergie, ou bien de l'incinération de déchets, les fumées issues de la combustion contiennent une proportion appréciable d'oxydes d'azote et ne peuvent être rejetées à l'atmosphère sans traitement. D'autres polluants, en particulier des gaz acides comme l'acide chlorhydrique ou le dioxyde de soufre, sont également émis, ainsi que des poussières et des particules solides.

D'une manière générale, plusieurs technologies d'élimination des oxydes d'azote sont disponibles et bien acceptées industriellement. Tout d'abord, pour éliminer les oxydes d'azote, on peut agir au niveau de la combustion proprement dite. Des brûleurs dits « bas-NOx » peuvent être utilisés dans le cas de la combustion du charbon ou du fioul, ou bien on peut modifier l'excès d'air, ou son étagement, de façon à ce que, dans les zones très chaudes de combustion, la formation des oxydes d'azote, à partir de l'azote de l'air, soit minimisée. Il a été également proposé d'enrichir l'atmosphère de combustion en oxygène ou bien de recycler du dioxyde de carbone pour accomplir cet effet. Cette approche reste limitée dans son efficacité et se révèle peu commode à mettre en oeuvre dans le cadre de l'incinération de déchets. Dans tous les cas, cette solution ne peut aucunement suffire à amener la teneur en oxydes d'azote dans les fumées de combustion en deçà de 100 mg/Nm³ en général.

Une seconde approche consiste à introduire, dans une zone particulière de la combustion, un réactif de dénitrification, usuellement de l'ammoniac ou de l'urée. Ce réactif se décompose alors et les radicaux générés réagissent pour empêcher la formation des oxydes d'azote et détruire ceux déjà formés. Là encore, cette solution connait des limites et il est difficile de dépasser des rendements de destruction de plus de 70 %, sauf à consentir une fuite d'ammoniac dépassant la dizaine de mg/Nm³. En outre, pour le cas particulier de l'incinération de déchets, on ne peut pas obtenir beaucoup mieux que 120 mg/Nm³ d'oxydes d'azote sans avoir une fuite d'ammoniac importante. Cette solution, dite non catalytique et sélective, qui est fréquemment désignée par l'anagramme SNCR (pour « Selective Non Catalytic Reduction »), n'est donc pas suffisante pour répondre aux besoins des unités modernes.

Actuellement, la technique suivie quand on a besoin d'obtenir des teneurs d'oxydes d'azote inférieures à 80 mg/Nm³ consiste à recourir à une dénitrification catalytique et sélective, dite SCR (pour « Selective Catalytic Reduction »). On fait réagir les oxydes d'azote avec un réactif approprié sur un catalyseur maintenu à une température relativement élevée. Le réactif employé est typiquement l'ammoniac ou bien encore l'urée. Si cette technique est maintenant bien maitrisée, certaines contraintes et limitations, comme l'existence de poisons tels que des oxydes alcalins, le phosphore et l'arsenic, ainsi que l'existence de composés pouvant se déposer et bloquer les pores du catalyseur, tels que des sulfates, des hydrogénosulfates d'ammonium, SO₃, etc., obligent soit à une épuration poussée des fumées à traiter, soit à opérer la dénitrification à une température supérieure à 250°C pour limiter l'impact de ces poisons et composés désactivant le catalyseur. Ceci est particulièrement vrai pour les installations d'incinération de déchets dont les fumées de combustion contiennent une variété de polluants bien plus considérable que pour les unités de combustion de gaz et de charbon.

En pratique, les unités de combustion sont souvent déjà équipées de moyens de dénitrification SNCR mais, puisque ces derniers ne suffisent pas à obtenir des niveaux d'oxydes d'azote assez bas pour satisfaire aux exigences réglementaires toujours plus strictes, il est nécessaire d'y adjoindre, en aval du traitement des fumées existant, un réacteur de dénitrification SCR. Si cette option permet de faire travailler le réacteur SCR dans de bonnes conditions, son intégration thermique ne peut se faire qu'au prix d'échangeurs coûteux, de type process-process. De plus, l'adjonction de ces équipements, à savoir les réacteurs SCR et les échangeurs process-process, engendre une perte de charge supplémentaire et coûte de l'énergie.

Il a été proposé des systèmes hybrides, dans lesquels on couple une dénitrification SCR à une dénitrification SNCR. Dans une telle approche, un réacteur dédié reste nécessaire et, rien que pour la dénitrification des fumées, deux systèmes et leurs équipements associés sont donc nécessaires, à savoir un pour la dénitrification SCR et l'autre pour la dénitrification SNCR.

De son côté, DE-A-196 12 240 divulgue un procédé de dénitrification, dans lequel des fumées à traiter sont dénitrifiées en les envoyant dans un dépoussiéreur, après les avoir mélangées avec un catalyseur de dénitrification, sous forme pulvérulente, et avec de l'ammoniac ou de l'urée, qui sont introduits directement dans les fumées, en tant qu'ajout de matières fraîches. De plus, le catalyseur est recyclé, par, successivement, récupération d'une fraction des solides collectés par le dépoussiéreur, réactivation de cette fraction dans une unité ad hoc alimentée en air chaud, et renvoi de la sortie de cette unité dans les fumées à traiter en amont du dépoussiéreur. Bien qu'un tel procédé semble prometteur, DE-A-196 12 240 est peu précis, voire muet, quant à certains paramètres indispensables pour sa mise en oeuvre. En outre, l'utilisation d'air chaud pour alimenter l'unité de réactivation rend peu viable la mise en oeuvre de ce procédé : une source d'air chaud n'est que très rarement disponible sur les sites industriels de dénitrification de fumées et, même dans le cas où une telle source est disponible ou bien créée, il se pose alors la question de la viabilité économique de son utilisation, dans le sens où DE-A-196 12 240 est muet quant à la température minimale requise pour cet air chaud alors que la valeur de cette température minimale est nécessairement substantielle, typiquement proche de 300°C, pour espérer réactiver suffisammert le catalyseur.

Enfin, il a été proposé, dans FR 2 934 790, d'intégrer un catalyseur pour une dénitrification SCR, dans le plenum de sortie d'un électrofiltre ou bien dans les gaines de ce dernier, afin de tirer parti d'un excès de réactif de dénitrification SNCR n'ayant pas réagi. Cette approche utilise une synergie heureuse entre les deux procédés, quand ils sont conduits dans un mode particulier, mais nécessite toujours deux systèmes, l'un pour la dénitrification SCR et l'autre par la dénitrification SNCR.

Par ailleurs, les autres polluants présents dans les fumées, comme les oxydes de soufre, l'acide chlorhydrique et l'acide fluorhydrique, ainsi que le mercure, pour n'en citer que quelques uns, doivent aussi être traités. Traditionnellement, des unités spécialement dédiées à ces polluants sont utilisées, par exemple des filtres à manches, des électrofiltres avec injection d'un réactif, ou encore des laveurs humides. Des technologies hybrides, captant à la fois les oxydes de soufre et d'azote, ont bien été proposées, mais elles ne traitent pas les polluants comme le mercure ou les dioxines.

Ceci étant rappelé, l'invention vise à proposer un procédé d'épuration de fumées de combustion, qui, tout en permettant une épuration fiable des polluants des fumées à traiter, soit beaucoup plus économique et mieux intégré.

A cet effet, l'invention a pour objet un procédé d'épuration de fumées de combustion contenant des oxydes d'azote et des polluants acides, tel que défini à la revendication 1.

Ainsi, conformément à l'invention, on combine pour le traitement de fumées de combustion, les étapes suivantes :
- une dénitrification de type SNCR, dans laquelle on introduit, dans une zone de température comprise entre 750° Cet 1150°C, un agent. réactif tel que l'ammoniac (NH₃) ou l'urée. La quantité d'agent réactif injectée est ajustée de façon à ne réaliser qu'une dénitrification partielle, qui est typiquement limitée entre 40 et 80 %. Ceci permet d'opérer une dénitrification préalable, tout en limitant les effets secondaires qu'aurait une dénitrification trop poussée, comme l'apparition de protoxyde d'azote (N₂O) ; et
- une épuration complémentaire des fumées ayant subit la dénitrification partielle précitée, épuration complémentaire dans laquelle, à la fois, la dénitrification des fumées est achevée et la captation des autres polluants est assurée. Pour ce faire, un mélange réactif, contenant un catalyseur de dénitrification, sous forme divisée, et au moins un réactif basique propre à assurer la captation des polluants acides, est injecté en amont d'un préparateur gaz-solides. La circulation dans ce séparateur gaz-solides des fumées, en présence combinée du catalyseur divisé et du réactif basique, tel que de la chaux vive, de la chaux hydratée, de la magnésie ou du bicarbonate de sodium, assure la captation ou la destruction des polluants présents dans ces fumées.

On notera que, pour l'homme du métier, il n'est pas naturel d'envisager de combiner, en une seule épuration, la captation de polluants acides et l'élimination des oxydes d'azote sur un catalyseur de dénitrification, le réactif alcalin de traitement des polluants acides ayant tendance à désactiver le catalyseur du mélange réactif introduit dans les fumées envoyées au séparateur gaz-solides. Grâce à l'invention, une telle épuration est mise en oeuvre car le catalyseur est réactivé en permanence par le réacteur de réactivation alimenté en vapeur d'eau et est recirculé, ce qui neutralise cet effet néfaste.

Comparativement à une régénération à l'air chaud, la régénération à la vapeur d'eau, conformément à l'invention, présente entre autres avantages que, eu égard à l'affinité de la vapeur d'eau pour l'ammoniac, l'ammoniac pénètre plus facilement à l'intérieur de pores saturés en vapeur d'eau que dans des pores saturés en air sec. De plus, la capacité calorifique de la vapeur d'eau est plus grande (0,473 cal/g/°C à 230°C) que celle de l'air (0,247 cal/g/°C à 230°C), et la viscosité est plus faible pour la vapeur d'eau (1,74e-5 Pa.s à 230°C) que pour l'air (2,70e-5 Pa.s à 230°C), ce qui facilite le transfert thermique, la diffusion des espèces à désorber et globalement le réchauffement régénératif. De surcroit, en pratique, la vapeur d'eau est un fluide communément disponible sur les sites industriel de traitement des fumées. Par ailleurs, l'homme de l'art n'est pas, dans le domaine de l'invention, amené à considérer naturellement la vapeur d'eau comme fluide régénérant car il est connu que l'eau déprime l'efficacité de dénitrification de certains catalyseurs. Toutefois il faut bien comprendre que l'exposition à une atmosphère très riche en eau ne se fait que dans le réacteur d'activation, et que, sitôt en contact avec les fumées, le catalyseur se ré-équilibre avec les conditions des fumées. Par ailleurs, les capacités d'entraînement d'espèces variées, organiques ou minérales, et pouvant empoisonner le catalyseur sont connues des chimistes qui pratiquent les entraînements « à la vapeur » à des fins de purification.

En pratique, le procédé conforme à l'invention s'applique au traitement des fumées de combustion de manière générale, plus particulièrement au traitement des fumées de combustion d'ordures ménagères, de déchets industriels ou de déchets spéciaux.

Des caractéristiques additionnelles avantageuses du procédé conforme à l'invention sont spécifiées aux revendications dépendantes.

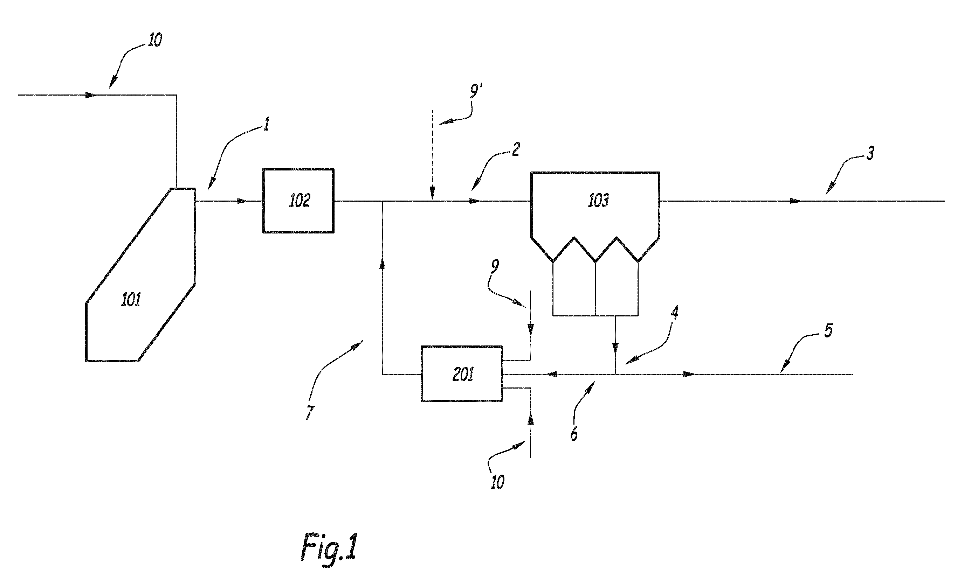

L'invention sera mieux comprise à la lecture de la description qui va suivre, donnée uniquement à titre d'exemple et faite en se référant à l'unique figure 1 qui est une vue schématique illustrant une installation de mise en oeuvre d'un procédé conforme à l'invention.

En référence à la figure 1, cette installation comprend une unité de combustion 101 qui brûle, par exemple mais de manière non exclusive, des ordures ménagères, des déchets industriels ou des déchets spéciaux. Cette unité 101 reçoit un flux 10 d'un agent réactif destiné à réaliser une dénitrification non catalytique et sélective, dite SNCR, des fumées produites par l'unité de combustion. D'une manière connue en soi, l'agent réactif 10 est constitué d'ammoniac, d'urée solide ou d'une solution d'urée dans l'eau, et est injecté dans une zone de l'unité de combustion 101, dans laquelle la température des fumées est comprise entre 750 et 1050°C, de préférence entre 850 et 1100 ° C.

Cette dénitrification de type SNCR, que l'on peut qualifier de dénitrification préliminaire pour des raisons qui apparaitront plus loin, présente un rendement fixé de manière volontaire à une valeur comprise entre 40% et 80%, de préférence entre 50% et 70%, et ce en ajustant le débit du flux d'agent réactif 10 alimentant l'unité de combustion 101. Ceci signifie que, en sortie de l'unité de combustion 101, entre 40% et 80% des oxydes d'azote (NO et NO₂) ont été éliminés des fumées de combustion, les fumées 1 sortant de l'unité 101 étant ainsi déjà partiellement dénitrifiées, par rapport à une situation où aucun agent réactif de dénitrification ne serait injecté. On rappelle que, comme présenté dans le préambule du présent document, il est techniquement possible d'obtenir un rendement de dénitrification SNCR supérieur à 80%, mais ceci est obtenu au prix d'effets secondaires importants, indésirables, comme l'apparition de protoxyde d'azote (N₂O), ainsi qu'une consommation excessive d'agent réactif de dénitrification.

Il faut cependant bien comprendre qu'un excès d'agent réactif 10, ou de ses sous produits de décomposition, à savoir l'ammoniac, l'urée ou l'acide isocianique, est souhaitable car, comme expliqué plus loin, cet excès va servir, à son tour, pour une dénitrification complémentaire dans une étape à venir. Le chlorure d'ammonium, qui est produit par une réaction entre l'ammoniac et l'acide chlorhydrique usuellement présents dans les fumées à traiter, peut également servir à son tour dans l'étape à venir précitée. Par conséquent, conformément à l'invention, il est intéressant de pousser la dénitrification SNCR dans l'unité de combustion 101 autant que faire se peut, sans pour autant que les autres effets indésirables apparaissent.

Les fumées 1 issues de l'unité de combustion 101 traversent ensuite un économiseur ou une chaudière 102, qui sont d'une technologie connue et dont le but est de récupérer l'énergie thermique véhiculée par les fumées 1.

Les fumées 2 sortant de l'économiseur ou de la chaudière 102 sont mélangées à un flux 7, qui va être décrit un plus loin, puis entrent dans un séparateur gaz-solides 103. Le séparateur gaz-solides 103 est d'une technologie connue en soi : il s'agit, par exemple et de manière préférée, d'un filtre à manches mais d'autres technologies, telles qu'un électrofiltre, peuvent être aussi employées. Le rôle du séparateur gaz-solides 103 est triple :
- d'abord, le séparateur 103 assure une fonction de dépoussiérage, en séparant les solides contenus dans les fumées 2 ;
- ensuite, le séparateur 103 assure une fonction de dépollution des fumées 2 pour les polluants de ces fumées, autres que les oxydes d'azote, notamment les polluants acides comme les dioxydes de soufre, l'acide chlorhydrique ou l'acide fluorhydrique, ainsi que le mercure ou les dioxines ; et
- enfin, le séparateur 103 assure un complément de dénitrification.

Ainsi, les fumées 3 sortant du séparateur gaz-solides 103 satisfont aux exigences de rejet pour l'ensemble des polluants considérés.

Pour ce faire, conformément à l'invention, un mélange réactif, constitué d'un mélange d'un catalyseur et d'un réactif basique, est introduit dans les fumées 2 en amont du séparateur gaz-solides 103. Dans le mode de réalisation préféré, illustré en traits pleins à la figure 1, ce mélange réactif est référencé 9 et est introduit dans un réacteur 201 qui traite une fraction 6 des résidus solides 4 extraits du séparateur 103, cette fraction de résidus solides 6 étant, en sortie du réacteur 201, renvoyée dans les fumées 2, conjointement avec le mélange réactif 9, sous forme du flux précité 7.

Selon l'invention, afin d'obtenir une consommation du mélange réactif 9 minimale, la fraction recirculée 6 du flux total 4 des solides extraits du séparateur 103 doit être significative, en constituant entre 50% et 95% du flux total 4, de préférence plus de 80% du flux total 4. Bien entendu, cela implique qu'une partie, référencée 5 sur la figure 1, des résidus solides 4 est évacuée, le rapport entre le flux 5 et le flux 6 déterminant le taux de recirculation.

Le réacteur 201 est d'une technologie connue en soi : il peut s'agir, par exemple et de manière non limitative, d'un réacteur à double vis, à tambour ou à lit fluidisé. Dans tous les cas, le rôle de ce réacteur 201 est de réactiver les résidus recirculés 6 avant qu'ils ne soient réintroduits, par le flux 7, en amont du séparateur gaz-solides 103, ainsi que de régénérer le catalyseur. En effet, les solides 4 extraits du séparateur 103 contiennent, outre des poussières et d'autres solides captés, des espèces réactives qui n'ont pas été totalement épuisées par le séparateur 103, de sorte qu'en envoyant au réacteur 201 la fraction 6 de ces résidus solides 4, les espèces réactives précitées sont réactivées avant d'être réintroduites dans les fumées 2 pour traiter à nouveau ces dernières.

Selon l'invention, de la vapeur d'eau 10 est introduite dans le réacteur d'activation 201 afin de servir au processus d'activation dans ce réacteur, en facilitant beaucoup la régénération des espèces réactives qui, comme expliqué juste ci-dessus, sont contenues dans les solides 4 extraits du séparateur 103.

Selon une des caractéristiques de l'invention, la partie du mélange réactif 9, constituée du catalyseur précité, est apte à réduire les oxydes d'azote par réaction entre ceux-ci et un composé réducteur comme l'ammoniac, l'urée ou l'acide isocianique, et ce typiquement à une température comprise entre 120°C et 200°C. Cette partie catalytique du mélange réactif 9 est comprise entre 5% et 30% en poids du mélange réactif 9.

Egalement selon une des caractéristiques de l'invention, la partie du mélange réactif 9, qui est constituée du réactif basique précité et qui est donc différente de la partie catalytique du mélange réactif 9, est apte à capter les polluants acides tels que l'acide chlorhydrique (HCl) ou le dioxyde de soufre (SO₂). Cette partie réactive du mélange 9 est ainsi constituée d'un composé alcalin, qui, à titre d'exemple, représente entre 70 et 95 % en poids du mélange 9 et est constitué de chaux vive, de chaux hydratée, de magnésie ou de bicarbonate de sodium.

On comprend que la partie catalytique du mélange réactif 9 sert à parachever la dénitrification des fumées 2. Elle utilise comme agent réducteur les composés contenus dans ces fumées 2, qui proviennent de la partie de l'agent réactif 10, qui n'a pas réagi au niveau de l'unité de combustion 101 : en effet, comme indiqué précédemment, pour que le rendement de dénitrification opérée dans l'unité 101 soit supérieur à 40%, voire de préférence compris entre 50 et 70%, l'agent réactif 10 doit être injecté en excès de sorte que les fumées provenant de l'unité 101 contiennent des espèces réductrices azotées qui vont pouvoir réagir à nouveau avec les oxydes d'azote au contact de la partie catalytique du mélange réactif 9, dans le séparateur gaz-solides 103 ainsi que dans ses gaines en amont.

En tenant compte des explications données juste ci-dessus, on comprend qu'une option, qui n'est pas représentée sur la figure 1 et qui est mise en oeuvre si nécessaire, consiste à injecter un complément d'agent réactif de réduction des oxydes d'azote, tel que de l'urée ou de l'ammoniac, en aval de l'unité de combustion 101, soit au réacteur d'activation 201, soit directement dans les gaines de circulation des fumées 1 ou 2, en amont du séparateur gaz-solides 103. Le réacteur 201 se prête particulièrement bien à une telle injection quand le complément d'agent de réduction des oxydes d'azote est de l'urée solide.

Les avantages apportés par l'invention sont multiples. En effet, avec une installation simple, le taux de dénitrification des fumées 3 est important. Hormis l'unité de combustion 101, l'installation est limitée au séparateur gaz-solides 103 et au réacteur d'activation 201. Le mélange réactif 9, qui est avantageusement conçu pour travailler à des températures comprises entre 120°C et 200°C, utilise le séparateur gaz-solides 103, et ses gaines amont, en tant que réacteur. Il n'y a pas besoin, contrairement à une installation de dénitrification catalytique de type SCR classique, de coûteux réchauffeurs et récupérateurs de chaleur, dont la fonction n'est que d'assurer que le catalyseur de dénitrification SCR opère à une température suffisante. Cette utilisation, à température faible, est rendue possible par la dénitrification partielle effectuée par l'unité de combustion 101 avec l'agent réactif 10, qui conduit à ce que les fumées 1 ne contiennent plus qu'une concentration assez faible d'oxydes d'azote, typiquement inférieure à 150 mg/Nm³, tout en contenant également les composés réducteurs issus de l'agent réactif 10. Ceci permet aussi de limiter la proportion de la partie catalytique dans le mélange réactif 9, ce qui est économiquement avantageux puisque la partie catalytique de ce mélange est plus chère que la partie constituée du réactif basique. Par ailleurs, le réacteur d'activation 201 alimenté avec la vapeur d'eau 10 régénère et réactive en continu le recirculat 6, permettant un taux de recirculation plus important et une consommation moindre du mélange réactif 9. Enfin, le fait que la partie catalytique du mélange réactif 9 soit sous forme divisée fait que les réactions de dénitrification catalytique des fumées 2 prennent place aussi bien dans le séparateur gaz-solides 103 que dans les gaines amont de celui-ci, dans lesquelles les réactifs et fumées « volent» et sont donc en contact pendant un temps allant de une à plusieurs secondes.

Autrement dit, conformément à l'enseignement technique de l'invention, l'ensemble des gaines, entre le point d'injection du flux 7 dans les fumées 2 et le séparateur gaz-solides 103, constitue de fait un réacteur multifonction, qui est simple, peu coûteux et bien intégré, et qui travaille à abattre l'ensemble des polluants présents dans les fumées 2, en particulier, à la fois, les polluants acides et les oxydes d'azote. Comme indiqué plus haut, ceci est rendu possible par l'utilisation du mélange réactif 9, dont la partie catalytique est active à basse température, c'est-à-dire entre 120°C et 200°C, ainsi que par la réactivation permanente, en présence de vapeur d'eau, des résidus recirculés et du catalyseur que ces derniers contiennent, par le réacteur d'activation 201.

Divers aménagements et variantes au procédé d'épuration décrit jusqu'ici sont par ailleurs envisageables. Ainsi, de manière optionnelle, un analyseur de fumées, mesurant la concentration d'au moins l'ammoniac (NH₃) ou celle du protoxyde d'azote (N₂O) est installé sur le trajet des fumées entre l'unité de combustion 101 et le séparateur gaz-solides 103 : cet analyseur peut alors avantageusement servir à piloter l'injection de l'agent réactif 10 dans l'unité de combustion 101. On peut ainsi chercher à maximiser le rendement de dénitrification non catalytique dans l'unité 101, tout en limitant les effets secondaires décrits plus haut, qui proviendraient d'une trop forte injection de l'agent réactif 10. De même, selon une autre variante, qui est montrée en traits pointillés sur la figure 1 en lien avec la référence 9', tout ou partie du mélange réactif précité est introduit directement dans les gaines de circulation des fumées 2, en amont du séparateur gaz-solide 103. Dans tous les cas, le mélange réactif 9 ou 9' peut, en plus du catalyseur et du réactif basique, inclure d'autres additifs spécifiques.

## Revendications

1. Procédé d'épuration de fumées de combustion contenant des oxydes d'azote et des polluants acides, dans lequel :
- dans une zone où les fumées à traiter présentent une température comprise entre 750 °C et 1150° C, de préférence entre 850 °C et 1100 °C, on injecte un agent réactif (10) de dénitrification et on ajuste le débit d'injection de cet agent réactif (10) de façon à réaliser une dénitrification non catalytique et sélective, ayant un rendement compris entre 40% et 80%,
- dans les fumées (1) résultant de la dénitrification non catalytique et sélective, on introduit un mélange réactif (9 ; 9'), contenant un catalyseur de dénitrification, sous forme divisée, et un réactif basique de captation des polluants acides, dans une proportion telle que le catalyseur constitue entre 5 et 30% en poids du mélange réactif,
- on fait ensuite circuler les fumées (2) contenant le mélange réactif (9 ; 9') dans un séparateur gaz-solides (103),
- avant de réintroduire en amont du séparateur gaz-solides une fraction majoritaire (6) des résidus solides (4) extraits du séparateur gaz-solides (103), on admet cette fraction majoritaire (6) à un réacteur d'activation (201) auquel est également admise de la vapeur d'eau (10) comme fluide de régénération du catalyseur, et
- on évacue la fraction minoritaire restante (5) des résidus solides (4) extraits du séparateur gaz-solides (103).

2. Procédé suivant la revendication 1, dans lequel un complément d'agent réactif de réduction des oxydes d'azote est également admis au réacteur d'activation (201).

3. Procédé suivant la revendication 2, dans lequel ledit complément d'agent réactif de réduction des oxydes d'azote est de l'urée solide.

4. Procédé suivant l'une quelconque des revendications précédentes, dans lequel un complément d'agent réactif de réduction des oxydes d'azote est injecté dans les gaines de circulation des fumées résultant de la dénitrification non catalytique et sélective, en amont du séparateur gaz-solides (103).

5. Procédé suivant l'une quelconque des revendications précédentes, dans lequel le mélange réactif (9) est admis au réacteur d'activation (201) en sortie duquel il rejoint les fumées résultant de la dénitrification non catalytique et sélective, par un flux (7) conjoint avec la fraction majoritaire (6) des résidus solides (4), sortant du réacteur d'activation.

6. Procédé suivant l'une quelconque des revendications précédentes, dans lequel le mélange réactif (9') est injecté dans les gaines de circulation des fumées résultant de la dénitrification non catalytique et sélective, en amont du séparateur gaz-solides (103).

7. Procédé suivant l'une quelconque des revendications précédentes, dans lequel l'agent réactif (10) est de l'ammoniac ou de l'urée.

8. Procédé suivant l'une quelconque des revendications précédentes, dans lequel la température des fumées (2) circulant dans le séparateur gaz-solides (103) est comprise entre 120°C et 200°C.

9. Procédé suivant l'une quelconque des revendications précédentes, dans lequel le réactif basique du mélange réactif (9 ; 9') est constitué de chaux vive, de chaux éteinte, de magnésie ou de bicarbonate de sodium.

10. Procédé suivant l'une quelconque des revendications précédentes, dans lequel la fraction majoritaire (6) des résidus solides (4) constitue plus de 80% de ces résidus solides (4).

## Patentansprüche

1. Verfahren zur Reinigung von Rauchgasen, die Stickoxide und säurehaltige Schadstoffe enthalten, bei dem:
- ein Denitrifikationsreagens (10) in eine Zone injiziert wird, in der die zu behandelnden Rauchgase eine Temperatur zwischen 750°C und 1150°C, vorzugsweise zwischen 850°C und 1100°C aufweisen, und der Injektionsdurchsatz dieses Reagens derart eingestellt wird, dass eine selektive nichtkatalytische Denitrifikation realisiert wird, die eine Ausbeute zwischen 40% und 80% aufweist,
- eine Reaktionsmischung (9; 9'), die einen Denitrifikationskatalysator in verteilter Form und ein basisches Reagens zum Aufnehmen der säurehaltigen Schadstoffe in einem Verhältnis enthält, derart, dass der Katalysator zwischen 5 und 30 Gewichtsprozenten des Reaktionsgemischs bildet, in die aus der selektiven nichtkatalytischen Denitrifikation resultierenden Rauchgase (1) eingeführt wird,
- anschließend die Rauchgase (2), die die Reaktionsmischung (9; 9') enthalten, in eine Gas-Feststoff-Trennvorrichtung (103) eingeführt werden,
- vor dem Wiedereinführen einer aus der Gas-Feststoff-Trennvorrichtung (103) extrahierten Hauptfraktion (6) von Feststoffrückständen (4) stromaufwärts zur Gas-Feststoff-Trennvorrichtung diese Hauptfraktion (6) einem Aktivierungsreaktor (201) zugegeben wird, dem gleichfalls Wasserdampf (10) als Fluid zur Regeneration des Katalysator zugegeben wird, und
- die verbleibende untergeordnete Fraktion (5) der aus der Gas-Feststoff-Trennvorrichtung (103) extrahierten Feststoffrückstände (4) entfernt wird.

2. Verfahren nach Anspruch 1, bei dem ein Reagenszusatz zur Reduktion der Stickoxide gleichfalls dem Aktivierungsreaktor (201) zugegeben wird.

3. Verfahren nach Anspruch 2, bei dem der Reagenszusatz zur Reduktion der Stickstoffoxide ein fester Harnstoff ist.

4. Verfahren nach einem beliebigen der vorhergehenden Ansprüche, bei dem ein Reagenszusatz zur Reduktion der Stickoxide in die Zirkulationsleitungen der Rauchgase, die von der selektiven nichtkatalytischen Denitrifikation herrühren, stromaufwärts zur Gas-Feststoff-Trennvorrichtung (103) injiziert wird.

5. Verfahren nach einem beliebigen der vorhergehenden Ansprüche, bei dem das Reaktionsgemisch (9) dem Aktivierungsreaktor (201) zugegeben wird, an dessen Ausgang es auf die von der selektiven nichtkatalytischen Denitrifikation herrührenden Rauchgase in einem Strom (7) gemeinsam mit der Hauptfraktion (6) der Feststoffrückstände (4) trifft, der den Reaktivierungsreaktor verlässt.

6. Verfahren nach einem beliebigen der vorhergehenden Ansprüche, bei dem das Reaktionsgemisch (9') in die Zirkulationsleitungen der Rauchgase, die von der selektiven nichtkatalytischen Denitrifikation herrühren, stromaufwärts zur Gas-Feststoff-Trennvorrichtung (103) injiziert wird.

7. Verfahren nach einem beliebigen der vorhergehenden Ansprüche, bei dem das Reagens (10) Ammoniak oder Harnstoff ist.

8. Verfahren nach einem beliebigen der vorhergehenden Ansprüche, bei dem die Temperatur der in der Gas-Feststoff-Trennvorrichtung (103) zirkulierenden Rauchgase zwischen 120°C und 200°C liegt.

9. Verfahren nach einem beliebigen der vorhergehenden Ansprüche, bei dem das basische Reagens des Reaktionsgemischs (9; 9') aus ungelöschtem Kalk, gelöschtem Kalk, Magnesium oder Natriumbikarbonat gebildet wird.

10. Verfahren nach einem beliebigen der vorhergehenden Ansprüche, bei dem die Hauptfraktion (6) der Feststoffrückstände (4) von mehr als 80% dieser Festoffrückstände (4) gebildet wird.

## Claims

1. Method for purifying combustion fumes containing nitrogen oxides and acid pollutants, in which:
- in a zone where the fumes to be treated have a temperature between 750°C and 1,150°C, preferably between 850°C and 1,100°C, a reactive agent (10) for denitrification is injected and the injection quantity of this reactive agent (10) is adjusted so as to achieve non-catalytic, selective denitrification, having an efficiency between 40% and 80%,
- in the fumes (1) resulting from the non-catalytic, selective denitrification, a reactive mixture (9; 9') is introduced, containing a denitrification catalyst, in a divided form, and a basic reagent for collecting acid pollutants, in a proportion such that the catalyst constitutes between 5 and 30% by weight of the reactive mixture,
- then the fumes (2) containing the reactive mixture (9; 9') are circulated in a gas-solids separator (103),
- before reintroducing, upstream of the gas-solids separator, a majority fraction (6) of the solid residues (4) extracted from the gas-solids separator (103), this majority fraction (6) is admitted into an activation reactor (201) to which likewise water vapour (10) is admitted as fluid for regeneration of the catalyst, and
- the remaining minority fraction (5) of the solid residues (4) extracted from the gas-solids separator (103) is discharged.

2. Method according to claim 1, in which a reactive agent complement for reducing nitrogen oxides is likewise admitted into the activation reactor (201).

3. Method according to claim 2, in which said reactive agent complement for reducing nitrogen oxides is solid urea.

4. Method according to any of the preceding claims, in which a reactive agent complement for reducing nitrogen oxides is injected into the flues for circulating fumes resulting from the non-catalytic, selective denitrification, upstream of the gas-solids separator (103).

5. Method according to any of the preceding claims, in which the reactive mixture (9) is admitted into the activation reactor (201), at the outlet of which it rejoins the fumes resulting from the non-catalytic, selective denitrification, via a flow (7) together with the majority fraction (6) of the solid residues (4) leaving the activation reactor.

6. Method according to any of the preceding claims, in which the reactive mixture (9') is injected into the flues for circulating fumes resulting from the non-catalytic, selective denitrification, upstream of the gas-solids separator (103).

7. Method according to any of the preceding claims, in which the reactive agent (10) is ammonia or urea.

8. Method according to any of the preceding claims, in which the temperature of the fumes (2) circulating in the gas-solids separator (103) is between 120°C and 200°C.

9. Method according to any of the preceding claims, in which the basic reagent of the reactive mixture (9; 9') comprises quick lime, slaked lime, magnesia or sodium bicarbonate.

10. Method according to any of the preceding claims, in which the majority fraction (6) of the solid residues (4) comprises more than 80% of these solid residues (4).
